# EUROPÄISCHE PATENTSCHRIFT

(11) **EP 2 433 865 B1**
(45) Veröffentlichungstag und Bekanntmachung des Hinweises auf die Patenterteilung: **27.01.2016**
(21) Anmeldenummer: 11007811.0
(22) Anmeldetag: 26.09.2011
(51) Int. Cl.: B64C 25/26

(54) **VERRIEGELUNGSSYSTEM SOWIE SCHALTUNGSVORRICHTUNG FÜR EIN VERRIEGELUNGSSYSTEM**
LOCKING SYSTEM AND SWITCHING DEVICE FOR A LOCKING SYSTEM
SYSTÈME DE VERROUILLAGE ET DISPOSITIF DE COMMUTATION POUR UN SYSTÈME DE VERROUILLAGE

(30) Priorität: 28.09.2010 DE 102010046735
(43) Veröffentlichungstag der Anmeldung: 28.03.2012
(73) Patentinhaber: Liebherr-Aerospace Lindenberg GmbH, 88161 Lindenberg/Allgäu (DE)
(72) Erfinder: Wolf, Klaus, 88079 Kressbronn (DE); Effinger, Markus, 82205 Gilching (DE); Kaps, Stephan, 88171 Weiler-Simmerberg (DE)
(74) Vertreter: Herrmann, Uwe

(56) Entgegenhaltungen:
- EP-A1- 0 106 725
- EP-A1- 0 589 158
- DE-A1- 3 732 138
- DE-A1- 19 526 227
- US-A- 4 796 932

## Beschreibung

Die vorliegende Erfindung betrifft ein Verriegelungssystem, insbesondere ein Verriegelungssystem für ein Luftfahrzeug sowie eine Schaltungsvorrichtung für ein Verriegelungssystem.

Moderne Luftfahrzeuge besitzen heutzutage größtenteils hydraulische Einziehfahrwerke. Um deren Lufttüchtigkeit, insbesondere im Hochgeschwindigkeitsflug, zu gewährleisten, ist es notwendig, dass die Fahrwerksysteme dieser Luftfahrzeuge im Betrieb sicher eingefahren, gehalten und bei Bedarf, beispielsweise bei einem Landevorgang, ebenso sicher wieder ausgefahren werden können.

Das sichere Halten wird bislang durch Verriegelungssysteme realisiert, die mechanisch mit der Struktur des Luftfahrzeugs verbunden sind und im eingefahrenen Zustand des Fahrwerksystems eine formschlüssige Verbindung zu diesem herstellen.

Erst im Zuge einer fremdaktivierten Hakenöffnungsbewegung wird das Fahrwerksystem formschlüssig freigegeben und entweder hydraulisch oder durch die wirkende Gravitation ausgefahren. Die Fremdaktivierung der Hakenöffnungsbewegung wird heute, aufgrund der relativ hohen Zuverlässigkeitsanforderungen für derartige Systeme primär durch einen hydraulisch betätigten Kolben und sekundär durch eine mechanische Seilzugbetätigung oder durch eine elektromechanische Betätigungseinheit erreicht.

Die Seilzüge derartiger mechanischer Betätigungseinheiten müssen häufig durch den Rumpf des Luftfahrzeugs über Druck- bzw. Temperaturzonen, Umlenkrollen, Führungen und Verteiler geführt werden. Nachteilig ist dabei die aufwendige Montage, intensive Wartung und die variierende Seilspannung aufgrund von unterschiedlichen Materialeigenschaften im System. Im Zuge einer fremdaktivierten Hakenöffnungsbewegung kann bei derartigen Systemen das Fahrwerk formschlüssig freigegeben werden. Unter anderem kann die Hakenöffnungsbewegung mechanisch durch einen Seilzug aktiviert werden. Die Seilzüge müssen dabei über mehrere Umlenkrollen und -führungen geführt werden, was sehr aufwendig und auch fehleranfällig ist.

Weiterhin sind Verriegelungssysteme mit elektromechanischen Betätigungseinheiten aus der WO 2005/005252 A1 bekannt. Diese werden mittels einer elektromagnetischen Spule bzw. einem Elektromotor mit Spindel oder dergleichen realisiert. Nachteilig ist dabei, dass diese nicht immer durch einfaches Abschalten der Energiezufuhr zurück zum Ausgangszustand gebracht werden können bzw. nicht in jedem beliebigen Zustand zum Reset/Restart fähig sind. Hierzu ist im Normalfall eine entsprechende Elektronik notwendig.

Aus der DE 10 2007 032 779 A1 ist des Weiteren ein Verriegelungssystem mit redundanten Antriebsvorrichtungen vorgesehen, wobei eine erste Antriebsvorrichtung eine elektromechanische Antriebseinheit und ein Getriebe aufweist und eine zweite Antriebsvorrichtung eine hydraulisch betätigte Antriebsvorrichtung ist. Dieses Verriegelungssystem weist eine Freilaufkupplung auf, um das Verriegelungssystem in eine definierte Endposition zurückstellen zu können.

EP 0 589 158 A1 betrifft ein fernsteuerbares Schloss, insbesondere für Kraftfahrzeugtüren.

EP 0 106 725 A1 offenbart ein Türschloss für Fahrzeugtüren sowie eine Steueranordnung für das elektrisch steuerbare Türschloss.

US 4 796 932 A offenbart eine Öffnungs-/Schließ-Einheit für Fond-Panels von Kraftfahrzeugen.

DE 37 32 138 A1 betrifft eine elektrische Verriegelung für die Anbringung in Fahrzeugen, insbesondere für Fahrzeugtüren.

DE 195 26 227 A1 offenbart ein Steuerungsgerät für eine Türschließvorrichtung.

Es ist daher die Aufgabe der vorliegenden Erfindung, ein Verriegelungssystem der eingangs genannten Art in vorteilhafter Weise weiterzubilden, insbesondere dahingehend, dass dieses vorzugsweise einfach aufgebaut ist und insbesondere keine zusätzliche Elektronik im Gerät notwendig ist sowie weiter vorzugsweise, dass etwaige Totpunkte des Verriegelungssystems überwunden und das Verriegelungssystem stets in eine Endposition rückstellbar ist.

Diese Aufgabe wird erfindungsgemäß gelöst durch ein Verriegelungssystem mit den Merkmalen des Anspruchs 1. Danach ist vorgesehen, dass ein Verriegelungssystem, insbesondere Verriegelungssystem für ein Luftfahrzeug, mit wenigstens einem Verriegelungsmittel versehen ist, das in wenigstens eine erste Position und in wenigstens eine zweite Position überführbar ist, wobei das Verriegelungssystem wenigstens eine Schaltungsvorrichtung aufweist, mittels derer das Erreichen einer definierten Endposition des Verriegelungsmittels sicherstellbar und/oder das Verriegelungssystem überwachbar ist.

Dadurch ergibt sich der Vorteil, dass das Verriegelungssystem stets in eine Endposition zurückstellbar ist. Eine derartige Endposition ist insbesondere die Position, in der das Verriegelungssystem verriegelt. Aus Sicherheitsgründen ist vorteilhafterweise das Verriegelungssystem derart ausgebildet, dass ohne Betätigung des Verriegelungsmittels im Flug eine sichere Verriegelung gewährleistet ist. In einer derartigen Ausgestaltung bietet es sich an, das Verriegelungssystem derart auszuführen, dass mittels der Schaltungsvorrichtung stets das Erreichen der Position, in der das Verriegelungssystem verriegelt, sichergestellt und bewirkt wird.

Denkbar ist aber auch, dass es sich um die Position handelt, in der das Verriegelungssystem entriegelt ist. Dies kann alternativ oder zusätzlich vorgesehen sein.

Das Verriegelungsmittel kann ein Haken sein oder einen Haken umfassen, der z. B. in der ersten Position eine Verriegelung eines Fahrwerks oder einer Tür eines Luftfahrzeugs bewirken kann und in der zweiten Position das Fahrwerk oder die Tür freigibt. Derartige Verriegelungssysteme werden auch Uplock-System oder kurz Uplock genannt.

Des Weiteren ist denkbar, dass das Verriegelungsmittel in ein weiteres Verriegelungsmittel zum Zwecke der Verriegelung in einer ersten Position eingreift und zum Zwecke der Entriegelung in einer zweiten Position das Verriegelungsmittel durch das weitere Verriegelungsmittel freigebbar ist, und dass das Verriegelungssystem wenigstens ein Exzentermittel, insbesondere eine Kurvenscheibe aufweist, wobei mittels des Exzentermittels das Verriegelungsmittel in die erste und/oder zweite Position überführbar ist.

Mittels der Schaltungsvorrichtung kann das Exzentermittel überwachbar sein.

Das weitere Verriegelungsmittel kann beispielsweise ein Eingriff oder ein Bolzen sein, der an dem Fahrwerk oder an der Tür des Luftfahrzeugs angeordnet ist und in der das Verriegelungsmittel des Verriegelungssystems eingreifen kann. Vorzugsweise kann vorgesehen sein, dass das Verriegelungsmittel formschlüssig oder zumindest teilweise formschlüssig in das weitere Verriegelungsmittel in der ersten Position eingreift. Die erste Position ist beispielsweise die Position, die das Verriegelungssystem im Flugbetrieb einnimmt und die zweite Position ist die Position, die im Landeanflug, am Boden und beim Start eingenommen wird.

Ferner ist möglich, dass die Schaltungsvorrichtung wenigstens ein Endschaltermittel aufweist, das in direkter und/oder indirekter Abhängigkeit von der Position des Verriegelungsmittels und/oder des Exzentermittels schaltbar ist, wobei das Endschaltermittel vorzugweise ein Mikroschalter ist und/oder einen Mikroschalter umfasst. In diesem Zusammenhang ist denkbar, Stellungen des Verriegelungsmittels und/oder Exzentermittels mit Schaltzuständen des Endschaltermittels zu verknüpfen, wobei derartige Stellungen des Verriegelungsmittels und/oder des Exzentermittels beispielsweise Stellungen sind, die einem Totpunkt entsprechen. Totpunkte sind dabei beispielsweise Stellungen zwischen der ersten und der zweiten Position bzw. der vollständig entriegelten und der verriegelten Stellung, in denen sich das Verriegelungsmittel und/oder das Exzentermittel in einer Gleichgewichtslage befindet und ohne weiteren Antrieb bzw. Impuls stehen bleiben würde. Durch eine entsprechende Schaltung des Endschaltermittels kann ein Verlassen dieser Gleichgewichtslage bzw. ein Überwinden dieses Totpunkts ermöglicht und auch gewährleistet werden. Vorzugsweise ist vorgesehen, dass das erfindungsgemäße Verriegelungssystem keinen Totpunkt aufweist, da vorzugsweise keine mechanische Rückstellung, wie beispielsweise eine Feder, vorhanden ist. Insofern ist der verwendete Begriff "Totpunkt" vorzugsweise im Sinne einer undefinierten Position zu verstehen.

Darüber hinaus kann vorgesehen sein, dass wenigstens ein mechanisches Element vorgesehen ist, das in direkter und/oder indirekter Abhängigkeit von der Position des Verriegelungsmittels und/oder des Exzentermittels bewegbar ist, insbesondere drehbar ist, und mittels dessen das Endschaltermittel betätigbar ist, wobei das mechanische Element vorzugsweise wenigstens eine Nockenscheibe ist und/oder umfasst. Durch das mechanische Element kann beispielsweise in Abhängigkeit von der Stellung des Verriegelungsmittels und/oder des Exzentermittels das Endschaltermittels betätigbar sein, wobei hierzu vorteilhafterweise das mechanische Element mittelbar und/oder unmittelbar mit dem Verriegelungsmittel und/oder dem Exzentermittel verbunden und/oder an diesem angeordnet ist. Denkbar ist in diesem Zusammenhang insbesondere, dass das Exzentermittel auf derselben Achse wie das mechanische Element, das vorzugsweise eine Nockenscheibe ist, angeordnet ist. Das mechanische Element kann beispielsweise über einen Betätigungshebel das Endschaltermittel auslösen bzw. schalten.

Des Weiteren ist denkbar, dass die Schaltungsvorrichtung wenigstens eine erste Stromversorgungsleitung und wenigstens eine zweite Stromversorgungsleitung umfasst, die parallel geschaltet sind und mittels derer jeweils und unabhängig voneinander wenigstens ein Antrieb des Verriegelungssystems mit Strom versorgbar ist. Vorteilhafterweise ist der Antrieb über die parallel angeordneten Stromversorgungsleitungen versorgbar, wobei die Versorgung über eine der beiden Stromversorgungsleitungen bereits ausreichend ist, um den Antrieb zu betätigen.

Außerdem ist möglich, dass in einer, vorzugsweise einer ersten Stromversorgungsleitung das Endschaltermittel angeordnet ist, wobei mittels des Endschaltermittels die Stromversorgung zum Antrieb über diese Stromversorgungsleitung unterbrechbar und/oder schließbar ist und/oder dass in einer, vorzugsweise einer zweiten Stromversorgungsleitung ein weiteres Schaltmittel vorgesehen ist, wobei mittels des weiteren Schaltermittels die Stromversorgung zum Antrieb über diese Stromversorgungsleitung unterbrechbar und/oder schließbar ist. Dadurch ergibt sich der Vorteil, den Antrieb jeweils über mehrere Stromversorgungsleitungen mit Strom versorgen zu können. Weiter ergibt sich der Vorteil, durch eine Kombination der Schaltzustände den Antrieb derart zu betätigen, dass jegliche undefinierte Position im System sicher überwunden und damit eine Rückstellung in eine definierte Endposition stets gewährleistbar ist.

Ferner kann vorgesehen sein, dass das weitere Schaltermittel wenigstens ein Relais ist und/oder umfasst, insbesondere wenigstens ein Zeitrelais ist und/oder umfasst. Beispielsweise kann vorgesehen sein, dass nach Verstreichen einer voreingestellten und vordefinierbaren Zeitspanne dieses die Stromzufuhr zum Antrieb über die zweite Versorgungsleitung unterbricht.

Des Weiteren ist vorzugsweise möglich, dass das Endschaltermittel derart schaltbar, insbesondere derart durch Betätigung mittels des mechanischen Elementes schaltbar ist, dass mittels der ersten Stromversorgungsleitung Strom zum Antrieb zuführbar ist, wenn das weitere Schaltermittel bereits derart geschaltet ist, dass die zweite Stromversorgungsleitung unterbrochen ist. So kann vorzugsweise in einem Fall, in dem die zweite Stromversorgungsleitung bereits geschlossen ist und das Verriegelungsmittel und/oder das Exzentermittel sich aber noch in einer undefinierten Position befindet, sichergestellt werden, dass über die erste Stromversorgungsleitung weiterhin der Antrieb mit Strom versorgt wird, so dass die Rückstellung in eine definierte Endposition erfolgen kann.

Vorteilhafterweise kann vorgesehen sein, dass die Schaltungsvorrichtung wenigstens ein Signalausgabemittel aufweist und/oder mit wenigstens einem Signalausgabemittel in Verbindung steht, mittels dessen wenigstens ein Zustand, insbesondere ein Schaltungszustand der Schaltungsvorrichtung ausgebbar und/oder übermittelbar ist. Das Signalausgabemittel kann beispielsweise eine LED, eine Lampe im Cockpit oder ein elektrischer Impuls sein, der zu einer zentralen Steuerungs- und/oder Regelungseinheit übermittelbar ist.

Des Weiteren betrifft die vorliegende Erfindung eine Schaltungsvorrichtung mit den Merkmalen des Anspruchs 10. Danach ist vorgesehen, dass eine Schaltungsvorrichtung mit den Schaltungsvorrichtungsmerkmalen nach einem der Ansprüche 1 bis 9 ausgeführt ist. Insbesondere handelt es sich bei der Schaltungsvorrichtung um eine Schaltungsvorrichtung für ein Verriegelungssystem nach einem der Ansprüche 1 bis 9.

Weitere Einzelheiten und Vorteile der Erfindung sollen nun anhand eines in der Zeichnung dargestellten Ausführungsbeispiels näher erläutert werden. Es zeigen:
- Figur 1:: eine schematische Frontansicht eines Verriegelungssystems;
- Figur 2:: eine schematische Rückansicht eines Verriegelungssystems;
- Figur 3:: eine Detailansicht des Verriegelungssystems; und
- Figur 4:: eine schematische Darstellung der Schaltungsvorrichtung.

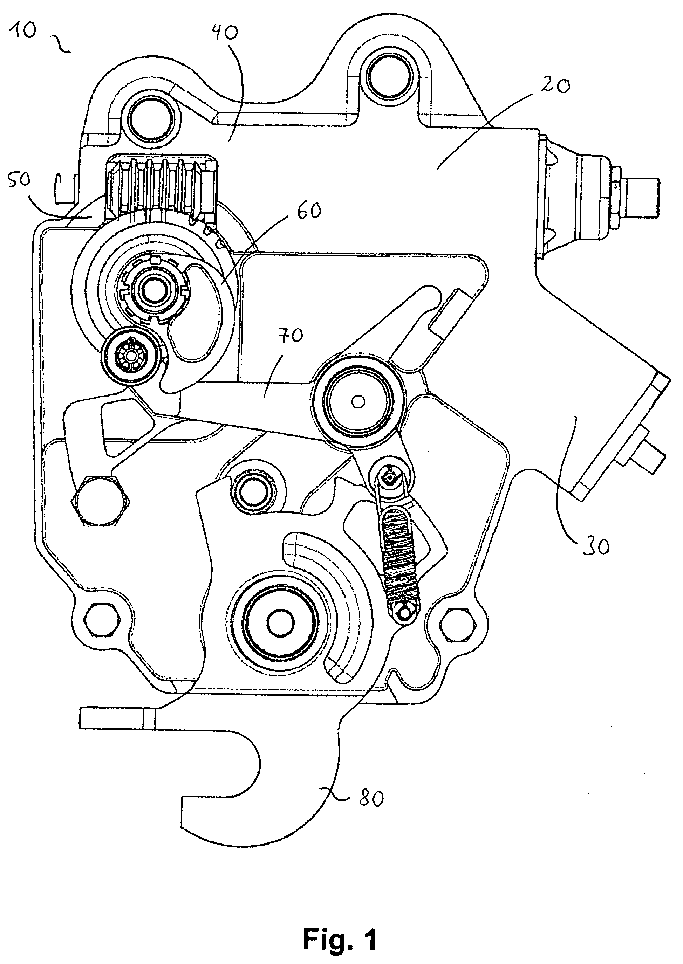

Figur 1 zeigt in schematischer Frontansicht ein Verriegelungssystem 10 eines Luftfahrzeugs, hier für ein Fahrwerk des Luftfahrzeugs, insbesondere eines Flugzeugs. Ein derartiges Verriegelungssystem 10 kann auch in entsprechender Modifikation zur Verriegelung einer Türverriegelungseinheit eines Luftfahrzeugs verwendet werden. Diese Verriegelungssysteme 10 werden auch Uplock 10 genannt.

Aus Redundanzgründen sind zwei Antriebe 20 und 30 vorgesehen, mittels derer das Verriegelungssystem 10 betätigt werden kann.

So ist als ein erster Antrieb ein elektrischer Antrieb 20 vorgesehen, der beispielsweise ein Bürstenmotor 20 sein kann. Dieser Elektromotor 20 ist drehmomentausgangsseitig beispielsweise mit einem Planetengetriebe 40 versehen und überträgt das Ausgangsdrehmoment beispielsweise über ein Schneckenradgetriebe 50 auf eine Achse mit einer Kurvenscheibe 60. Mittels der Kurvenscheibe 60, die üblicherweise zur Betätigung gemäß Darstellung in Figur 1 gegen den Uhrzeigersinn gedreht wird, kann der Betätigungshebel 70 derart bewegt werden, dass der Haken 80 von der ersten Position, der Verriegelungsposition, in eine zweite Position, die Entriegelungsposition überführt wird. Grundsätzlich ist auch eine Drehung der Kurvenscheibe 60 im Uhrzeigersinn möglich und von der Erfindung mit umfasst.

Unabhängig davon kann der Betätigungshebel 70 auch durch einen zweiten Antrieb 30, nämlich den hydraulischen Antrieb 30 bewegt werden und zwar ebenfalls derart, dass der Haken 80 von der ersten Position, der Verriegelungsposition, in eine zweite Position, die Entriegelungsposition überführt wird.

Die Verwendung zweier unterschiedlicher Antriebe, hier zum Einen ein elektrischer Antrieb 20 und zum Anderen ein hydraulischer Antrieb 30, erhöht die Betriebssicherheit, da beispielsweise bei einem Ausfall des elektrischen Antriebs 20 das Verriegelungssystem 10 immer noch mittels des hydraulischen Antriebs 30 betätigt werden kann. Dies gilt im umgekehrten Fall selbstverständlich entsprechend.

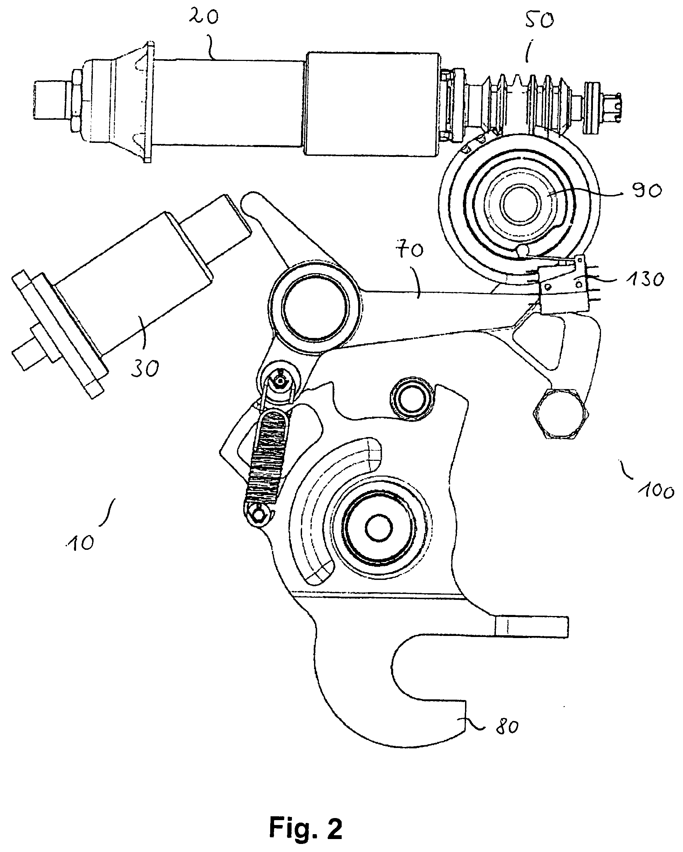

Figur 2 zeigt in schematischer Rückansicht das in Figur 1 gezeigte und in diesem Zusammenhang erläuterte Verriegelungssystem 10. Auf der Rückseite der Achse mit der Kurvenscheibe 60 ist eine Nockenscheibe 90 vorgesehen, mittels derer ein Hebel 112 des Mikroschalters 130 betätigbar und damit der Mikroschalter 130, der Bestandteil der Schaltung 100 ist, schaltbar, insbesondere ein- und ausschaltbar ist.

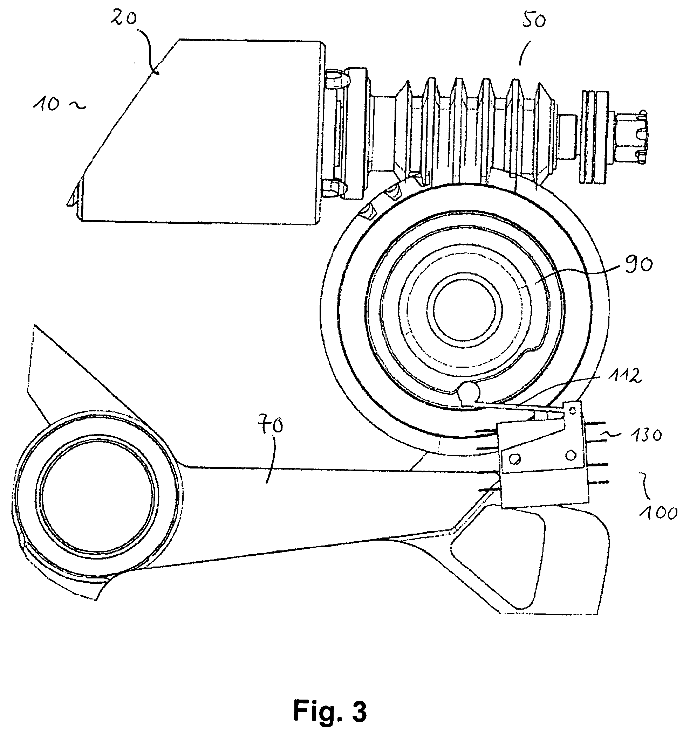

Die Anordnung von Mikroschalter 130 und der Nockenscheibe 90 des Verriegelungssystems 10 gemäß Figur 1 und 2 ist nochmal im Detail in Figur 3 gezeigt.

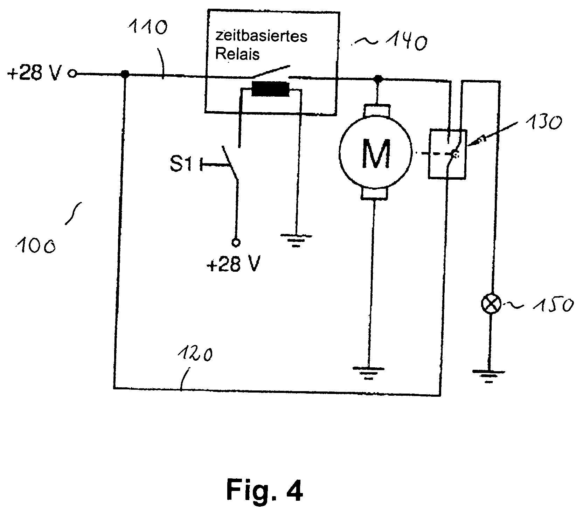

Figur 4 zeigt den prinzipiellen Aufbau der Schaltung 100:
Der elektrische Antrieb 20 öffnet in seiner Ausgangsposition den Endschalter 130, hier in einer möglichen Ausführung als Mikroschalter 130 gezeigt, über ein mechanisches Element 90, hier als mögliche Ausführung mit Nockenscheibe 90, wodurch die Stromzufuhr zum Motor 20 unterbrochen ist.

Wird nun eine Funktionsüberprüfung oder ein Notentriegeln des nicht näher dargestellten Fahrwerks durchgeführt, so wird der Schalter S1 geschlossen. Das Zeitrelais 140 bzw. "time based relay" 140 wird über den Schalter S1 mit Strom versorgt und betätigt für eine vordefinierte Zeit seinen Schalter, um den Antrieb 20 mit Strom zu versorgen. Über die erste Stromversorgungsleitung 110 wird somit ein erster Stromversorgungskreislauf für den Antrieb 20 etabliert.

Der Antrieb 20 betätigt über das bzw. die Getriebe 40, 50 den Entriegelungsmechanismus sowie ein mechanisches Element 90, hier beispielsweise die Nockenscheibe 90, über deren Kulisse der Mikroschalter 130 betätigt wird. Ab einem definierten Drehwinkel der Nockenscheibe 90 schließt der Mikroschalter 130 und versorgt den Motor 20 parallel zum Zeitrelais 140 über die zweite, parallele Stromversorgungsleitung 120 mit Strom.

Ist die vorgegebene Zeit im Zeitrelais 140 verstrichen, unterbricht dieses die Stromzufuhr 110 zum Antrieb 20. Befinden sich der Antrieb 20 bzw. die Nockenscheibe 90 nicht in ihrer Ausgangsposition, in der über den Mikroschalter 130 die zweite Stromversorgungsleitung 120 unterbrochen ist, so ist der Parallelstromkreis über die zweite Stromversorgungsleitung 120 über den Mikroschalter 130 weiterhin geschlossen und versorgt den Motor 20 so lange mit Strom, bis sich dieser in seine Ausgangsposition gedreht hat und über den Mikroschalter 130 geöffnet wird.

Über ein Signal 150 zur Überwachung, z. B. eine LED 150 oder eine Lampe 150 im Cockpit oder ein elektrischer Impuls 150, kann eine Fehlfunktion des elektrischen Antriebs 20, insbesondere auch eine Fehlfunktion des Mikroschalters 130 sehr einfach erkannt werden. Das Signal 150 kann auch für eine Anzeige/Funktion im Fahrwerkskontroller verwendet werden.

Dadurch wird kontrolliert, ob sich der Motor 20 und die Kurvenscheibe 60 nach einer bestimmten Zeit wieder in ihrer Ausgangsposition befinden. Beispielweise muss hierzu die LED 150 oder Anzeige oder Lampe 150 aktiv sein. In Kombination mit einer Steuereinheit können unter Berücksichtigung der Zeit und/oder weiterer Sensoren, z. B. Näherungsschalter zur Bestätigung der Zustände "Fahrwerk ausgefahren und verriegelt" oder "Fahrwerk eingefahren und verriegelt" und/oder "Verriegelungshaken ent- bzw. verriegelt", auch differenziertere Meldungen im Cockpit zur Anzeige gebracht werden.

Ein wesentlicher weiterer Vorteil an dieser Verschaltung ist der Fehlermodus. Bei Ausfall des Endschalters 130 hat dies keinerlei Auswirkung auf die Ausfahrfunktion des Fahrwerks oder beispielsweise das Öffnen einer Tür, wenn es sich um ein Türverriegelungssystem handelt. Der Endschalter 130 wird lediglich dazu benötigt, die Kurvenscheibe 60 wieder in die Ausgangsstellung zu fahren. Ist dies nicht möglich, so würde beim nächsten Einfahrvorgang, bzw. einem Türschließvorgang, das Verriegelungssystem 10 unter Umständen nicht verriegeln. Diese Fehlfunktion wird mit der Überwachungsfunktion 150 jedoch frühzeitig erkannt, so dass vor dem nächsten Start eine Überprüfung am Boden stattfinden kann.

## Patentansprüche

1. Verriegelungssystem (10), insbesondere Verriegelungssystem (10) für ein Luftfahrzeug, mit wenigstens einem Verriegelungsmittel (80), das in wenigstens eine erste Position und in wenigstens eine zweite Position überführbar ist, wobei das Verriegelungssystem (10) wenigstens eine Schaltungsvorrichtung (100) aufweist, und wobei wenigstens ein Antrieb (20, 30) zur Betätigung des Verriegelungssystems (10) vorgesehen ist,
**dadurch gekennzeichnet, dass**
die Schaltungsvorrichtung (100) wenigstens eine erste Stromversorgungsleitung (110) und wenigstens eine zweite Stromversorgungsleitung (120) umfasst, die parallel geschaltet sind und mittels derer jeweils und unabhängig voneinander der wenigstens eine Antrieb (20) des Verriegelungssystems (10) mit Strom versorgbar ist, so dass das Erreichen einer definierten Endposition des Verriegelungsmittels (80) sicherstellbar und/oder das Verriegelungssystem (10) überwachbar ist.

2. Verriegelungssystem (10) nach Anspruch 1, **dadurch gekennzeichnet, dass** das Verriegelungsmittel (80) in ein weiteres Verriegelungsmittel (70) zum Zwecke der Verriegelung in einer ersten Position eingreifbar ist und zum Zwecke der Entriegelung in einer zweiten Position das Verriegelungsmittel (80) durch das weitere Verriegelungsmittel (70) freigebbar ist, und dass das Verriegelungssystem (10) wenigstens ein Exzentermittel (60) aufweist, wobei mittels des Exzentermittels (60) das Verriegelungsmittel (80) in die erste und/oder zweite Position überführbar ist und wobei das Exzentermittel (60) überwachbar ist.

3. Verriegelungssystem (10) nach Anspruch 1 oder 2, **dadurch gekennzeichnet, dass** die Schaltungsvorrichtung (100) wenigstens ein Endschaltermittel (130) aufweist, das in direkter und/oder indirekter Abhängigkeit von der Position des Verriegelungsmittels (80) und/oder des Exzentermittels (60) schaltbar ist.

4. Verriegelungssystem (10) nach Anspruch 3, **dadurch gekennzeichnet, dass** wenigstens ein mechanisches Element (90) vorgesehen ist, das in direkter und/oder indirekter Abhängigkeit von der Position des Verriegelungsmittels (80) und/oder des Exzentermittels (60) bewegbar ist und mittels dessen das Endschaltermittel (130) betätigbar ist.

5. Verriegelungssystem (10) nach einem der vorhergehenden Ansprüche, **dadurch gekennzeichnet, dass** in einer Stromversorgungsleitung (120) das Endschaltermittel (130) angeordnet ist, wobei mittels des Endschaltermittels (130) die Stromversorgung zum Antrieb (20) über diese Stromversorgungsleitung (120) unterbrechbar und/oder schließbar ist und/oder dass in einer Stromversorgungsleitung (110) ein weiteres Schaltmittel (140) vorgesehen ist, wobei mittels des weiteren Schaltermittels (140) die Stromversorgung zum Antrieb (20) über diese Stromversorgungsleitung (110) unterbrechbar und/oder schließbar ist.

6. Verriegelungssystem (10) nach Anspruch 5, **dadurch gekennzeichnet, dass** das weitere Schaltermittel (140) wenigstens ein Relais (140) ist und/oder umfasst.

7. Verriegelungssystem (10) Anspruch 5 oder 6, **dadurch gekennzeichnet, dass** das Endschaltermittel (130) derart schaltbar ist, dass mittels der ersten Stromversorgungsleitung (120) Strom zum Antrieb (20) zuführbar ist, wenn das weitere Schaltermittel (140) bereits derart geschaltet ist, dass die zweite Stromversorgungsleitung (110) unterbrochen ist.

8. Verriegelungssystem (10) nach einem der vorhergehenden Ansprüche, **dadurch gekennzeichnet, dass** die Schaltungsvorrichtung (100) wenigstens ein Signalausgabemittel (150) aufweist und/oder mit wenigstens einem Signalausgabemittel (150) in Verbindung steht, mittels dessen wenigstens ein Zustand ausgebbar und/oder übermittelbar ist.

9. Schaltungsvorrichtung (100) mit den Schaltungsvorrichtungsmerkmalen nach einem der vorhergehenden Ansprüche.

## Claims

1. A locking system (10), in particular a locking system (10) for an aircraft, having at least one locking means (80) which can be moved into at least one first position and into at least one second position, with the locking system (10) having at least one switching apparatus (100) and wherein at least one drive (20, 30) is provided for the actuation of the locking system (10),
**characterized in that**
the switching apparatus (100) includes at least one first power supply line (110) and at least one second power supply line (120) which are connected in parallel and by means of which the at least one drive (20) of the locking system (10) can in each case be supplied with power independently of one another so that the achieving of a defined end position of the locking means (80) can be ensured and/or the locking system (10) can be monitored.

2. A locking system (10) in accordance with claim 1, **characterized in that** the locking means (80) can engage into a further locking means (70) for the purpose of the locking in a first position and the locking means (80) can be released by the further locking means (70) for the purpose of the unlocking in a second position; and **in that** the locking system (10) has at least one eccentric means (60), with the locking means (80) being able to be moved into the first and/or second positions by means of the eccentric means (60) and with the eccentric means (60) being able to be monitored.

3. A locking system (10) in accordance with either of claims 1 or 2, **characterized in that** the switching apparatus (100) has at least one limit switch means (130) which is switchable in direct and/or indirect dependence on the position of the locking means (80) and/or of the eccentric means (60).

4. A locking system (10) in accordance with claim 3, **characterized in that** at least one mechanical element (90) is provided which is movable in direct and/or indirect dependence on the position of the locking means (80) and/or of the eccentric means (60) and by means of which the limit switch means (130) can be actuated.

5. A locking system (10) in accordance with one of the preceding claims, **characterized in that** the limit switch means (130) is arranged in a power supply line (120), with the power supply for the drive (20) via this power supply line (120) being able to be interrupted and/or closed by means of the limit switch means (130); and/or **in that** a further switching means (140) is provided in a power supply line (110), with the power supply for the drive (20) via this power supply line (110) being able to be interrupted and/or closed by means of the further switching means (140).

6. A locking system (10) in accordance with claim 5, **characterized in that** the further switch means (140) is and/or comprises at least one relay (140).

7. A locking system (10) in accordance with claim 5 or 6, **characterized in that** the limit switch means (130) is switchable such that power can be supplied to the drive (20) by means of the first power supply line (120) if the further switch means (140) has already been switched such that the second power supply line (110) is interrupted.

8. A locking system (10) in accordance with one of the preceding claims, **characterized in that** the switching apparatus (100) has at least one signal output means (150) and/or is in communication with at least one signal output means (150) by means of which at least one state can be output and/or communicated

9. A switching apparatus (100) having the switching apparatus features in accordance with one of the preceding claims.

## Revendications

1. Système de verrouillage (10), en particulier système de verrouillage (10) destiné à un véhicule aérien, comprenant au moins un moyen de verrouillage (80), qui peut être transféré dans au moins une première position et au moins une seconde position, le système de verrouillage (10) comportant au moins un dispositif de commutation (100), et au moins un entraînement (20, 30) étant prévu pour l'actionnement du système de verrouillage (10),
**caractérisé en ce que**
le dispositif de commutation (100) comprend au moins une première ligne d'alimentation électrique (110) et au moins une seconde ligne d'alimentation électrique (120), qui sont branchées en parallèle et au moyen desquelles, respectivement et indépendamment l'une de l'autre, l'au moins un entraînement (20) du système de verrouillage (10) peut être alimenté en courant, de sorte qu'il est possible d'assurer qu'une position finale définie du moyen de verrouillage (80) soit atteinte et/ou de surveiller le système de verrouillage (10).

2. Système de verrouillage (10) selon la revendication 1, **caractérisé en ce que**, dans une première position, le moyen de verrouillage (80) peut être mis en prise dans un autre moyen de verrouillage (70) dans le but du verrouillage, et, dans une seconde position, le moyen de verrouillage (80) peut être libéré par l'autre moyen de verrouillage (70) dans le but du déverrouillage, et **en ce que** le système de verrouillage (10) comporte au moins un moyen excentrique (60), le moyen de verrouillage (80) pouvant être transféré dans la première et/ou seconde position au moyen du moyen excentrique (60) et le moyen excentrique (60) pouvant être surveillé.

3. Système de verrouillage (10) selon la revendication 1 ou 2, **caractérisé en ce que** le dispositif de commutation (100) comporte au moins un moyen à interrupteur de fin de course (130) qui peut être commuté en relation directe et/ou indirecte avec la position du moyen de verrouillage (80) et/ou du moyen excentrique (60).

4. Système de verrouillage (10) selon la revendication 3, **caractérisé en ce qu'**au moins un élément mécanique (90) est prévu, qui est déplaçable en relation directe et/ou indirecte avec la position du moyen de verrouillage (80) et/ou du moyen excentrique (60) et au moyen duquel le moyen à interrupteur de fin de course (130) peut être actionné.

5. Système de verrouillage (10) selon l'une des revendications précédentes, **caractérisé en ce que** le moyen à interrupteur de fin de course (130) est disposé dans une ligne d'alimentation électrique (120), l'alimentation en courant vers l'entraînement (20) par le biais de cette ligne d'alimentation électrique (120) pouvant être coupée et/ou fermée au moyen du moyen à interrupteur de fin de course (130) et/ou **en ce qu'**un autre moyen de commutation (140) est prévu dans une ligne d'alimentation électrique (110), l'alimentation en courant vers l'entraînement (20) par le biais de cette ligne d'alimentation électrique (110) pouvant être coupée et/ou fermée au moyen de l'autre moyen de commutation (140).

6. Système de verrouillage (10) selon la revendication 5, **caractérisé en ce que** l'autre moyen de commutation (140) est et/ou comprend au moins un relais (140).

7. Système de verrouillage (10) selon la revendication 5 ou 6, **caractérisé en ce que** le moyen à interrupteur de fin de course (130) peut être commuté de telle manière qu'au moyen de la première ligne d'alimentation électrique (120), du courant peut être alimenté vers l'entraînement (20), quand l'autre moyen de commutation (140) est déjà commuté de telle manière que la seconde ligne d'alimentation électrique (110) est coupée.

8. Système de verrouillage (10) selon l'une des revendications précédentes, **caractérisé en ce que** le dispositif de commutation (100) comporte au moins un moyen de sortie de signal (150) et/ou est en liaison avec au moins un moyen de sortie de signal (150), au moyen duquel au moins un état peut-être sorti et/ou transmis.

9. Dispositif de commutation (100) comprenant les caractéristiques de dispositif de commutation selon l'une des revendications précédentes.
